# EUROPEAN PATENT APPLICATION

(11) **EP 3 235 548 A1**
(43) Date of publication of application: **25.10.2017**
(21) Application number: 16186855.9
(22) Date of filing: 01.09.2016
(51) Int. Cl.: A63B 41/08, B32B 5/18, B32B 7/12, B29D 22/02, B29D 22/04, A63B 45/00, A63B 41/02

(54) **A DPS SPORT BALL**

(30) Priority: 22.04.2016 PK 2372016
(71) Applicant: Silver Star Enterprises (Pvt.) Ltd., Sialkot (PK)
(72) Inventor: Iqbal, Sheikh Jahangir, Sialkot (PK)
(74) Representative: Awapatent AB

(57) **Abstract**

A DPS (dual pressure system) sport ball incorporating a special, environment friendly casing that forms an exterior surface of the ball, which is bonded to a multiple lining layers to form a laminated sheet. The laminated sheet is sized, printed, and cut out into specifically designed panels using highly optimized and automated specifically developed machines. The panel cut outs are stitched together using a special stitching machine and a specific, compatible bladder is incorporated in the ball. The partially machine stitched ball is then finally closed by manual stitching and the seams are protected with a special adhesive. Resultantly, due to unique construction materials, their unique arrangement, innovative technology, and highly automated manufacturing processes, the DPS sport ball has advantageous durability, playability, controllability and excellent flight characteristics. The DPS sport ball qualifies under the international standards of match/professional balls at a very competitive price.

## Description

### CROSS-REFERENCE TO RELATED APPLICATIONS

This application claims the benefit of Pakistan Patent Application No. 237/2016, filed 22 April 2016, which is hereby incorporated herein by reference in its entirety.

### BACKGROUND OF THE INVENTION

### 1. Field of the Invention

The present invention relates to the materials utilized in the construction and method of manufacturing of a sport ball.

### 2. Description of Related Art

Conventionally, a variety of techniques are utilized in manufacturing a sport ball, such as hand-stitching, thermo-bonding, and machine stitching. The hand-stitching technique is comparatively extensive and requires a highly skilled labor force and prolonged manufacturing processes. Consequently, the hand-stitched ball is not cost efficient.

Thermo-bonded sport balls are manufactured within a relatively short time span by using machines, but as it is generally seamless, use of such a ball presents many disadvantages including loss of trajectory control over flight during play. Thus, the thermo-bonded ball could not gain popularity and fondness from many international professional players.

Machine-stitched balls are known for their cheap construction, machine stitching and low price. They have become successful in the market, and have gained popularity among the beginners and general public. Yet due to poor construction materials and consequently poor durability, the machine stitched ball cannot achieve the international standards of match/professional balls.

The present invention overcomes the many disadvantages present in the conventional ball technologies by utilizing distinctive construction materials, their specific arrangement within the layers, innovative techniques and highly optimized, automated machines for manufacturing the sport ball.

### BRIEF SUMMARY OF THE INVENTION

The present invention relates to a DPS (dual pressure system) sport ball having distinctive construction material, their novel and specific arrangements, innovative techniques and method of manufacturing the same. The DPS sport ball incorporates two major construction components - a plurality of panels and a bladder, wherein the panels include specifically developed outer casing material bonded to multiple lining layers.

The bladder incorporated herein is a specially developed rubber bladder, which can additionally be thread wound or fabric wrapped to maintain robustness, round shape, and air retention within the ball.

During the manufacturing, the present invention utilizes highly automated and optimized machines for sheet laminating, sheet sizing, printing of panels, their debossing, cutting, die-punching, machine stitching, and their manual stitching, seam protection so that the ball manufactured is not only robust and round, but also has increased durability, quality, playability, controllability and has an excellent flight characteristics.

In an exemplary embodiment, the present invention is a DPS sport ball comprising a casing material that forms an exterior surface of the ball, a multiple lining system bonded with the casing material to form panels using highly efficient automated manufacturing processes, and a compatible bladder to maintain shape of the ball, wherein the panels are a majority stitched together on a highly optimized stitching machine and then manually stitched to finalize the product.

The casing material can be selected from the group consisting of environment friendly polyurethane (EPU), normal PU, water-borne PU dispersion (WPU), PU micro-fiber, PU high solid, and TPU (thermoplastic polyurethane).

The multiple lining system can comprise five lining layers.

The multiple lining system can comprise lining layers of foam and fabric with a specific arrangement, wherein foam and the fabric are bonded using a water-based natural adhesive.

A first lining layer can be a fabric selected from the group consisting of woven and non-woven fabric bonded to the casing material of the sport ball.

A second lining layer can be a compatible foam, wherein the foam is bonded to the first lining layer. The compatible foam can be a thermoplastic elastomer (TPE) foam.

A third lining layer can be a fabric selected from group consisting of polyester viscose, polyester cotton, and 100% polyester fabric, wherein the third lining layer is bonded to the second lining layer.

A fourth lining layer can be a compatible foam, wherein the fourth lining layer is bonded to the third lining layer. The compatible foam can be TPE foam. The dimension of the fourth lining layer can be less than the preceding layers.

A fifth lining layer can be a compatible foam, wherein the fifth lining layer is bonded to the fourth lining layer. The compatible foam can be TPE foam. The fifth lining layer can be lesser or equal in size of the bonded fourth layer. The fifth lining layer can be in the form of one or more patches. The shape of the fifth lining layer can be similar or different from the preceding layers. The fifth lining layer can be round in shape. The fifth lining layer can have a diameter in the range from 3.5 cm - 5 cm. The fifth lining layer can contain one or more holes where in case of more, holes are different or similar in diameter or shape from one another. The fifth lining layer can contain a hole in the center of one or more patches. The diameter of the hole can be in the range from 0.7-2 cm.

All the lining layers can be bonded by a natural or synthetic adhesive. All the lining layers can be bonded by a water-based natural adhesive.

Each panel of the DPS can include an outer casing material and five lining layers. Each panel can have a particular shape and size. The panels can incorporate a shape selected from the group consisting of octagonal, hexagonal, pentagonal, circular, and other specific shapes.

The DPS can comprise a number of panels, for example, 6, 10, 12, 14, 20, 32, 36 panels.

The panels can be debossed with two parallel lines.

The panels can be at least partially stitched by a highly optimized stitching machine. The stitching machine can be equipped with an air pressure system.

The partially machine stitched ball is inverted inside-out so as to contain a specially developed rubber bladder in it.

The bladder can be selected from the group consisting of natural latex/rubber, synthetic latex/rubber including carbon-latex, butyl, and PU.

The bladder can additionally be wrapped with a fabric around it. The bladder can be a thread wound bladder.

Portions of panels within the ball, not stitched by a stitching machine, can be manually stitched to close the ball.

A special adhesive can be used to protect the seam gaps.

A ball that absorbs too much water will not roll very far if at all, and players will definitely notice it when they head the ball. The ball must stay afloat as much as possible and not sink like a stone. Under extreme conditions, when it has rained for hours and the ground is soaked, any ball will absorb some water. Thus, how much it absorbs is crucial.

In various embodiments, the water uptake by the present ball can be less than 0.4%.

A method of manufacturing a DPS sport ball can comprise sheet lamination, sheet sizing, printing of the panels, their debossing, cutting, die-punching, machine stitching, manual stitching and seam protection.

The sheet sizing can be done in accordance with the specific requirements of the shape and/or number of the panels by a highly specific laser guided presses.

The panels can be printed on the sheet by a highly optimized auto-printing machine.

A plurality of the panels can have a specific shape or size and printed in a single stroke. The printed panels can be debossed by a debossing machine. The printed panels can be debossed with two parallel lines.

A plurality of the panels can be cut out in a specific shape and size by a specifically developed cutting machine in a single stroke.

The multi-layered panels can be punched by computer numeric controlled (CNC) punching presses to form holes on both sides of the panels in one stroke in order to facilitate the manual stitching. The panels can be stitched together by a stitching machine. The stitching machine can contain a special air pressure system to press and control the panel while stitching. The machine-stitched panels can have a bonded bladder that is manually reversed.

The fourth and fifth lining layers can be bonded to the succeeding layers with a water-based natural adhesive so that each panel can comprise an outer casing material and five lining layers.

The ball is inverted manually and the bladder is incorporated in the partially machine stitched ball.

Remaining portions of the ball are manually stitched to close the ball.

The seam gap can be protected by a special adhesive manually applied or applied by auto-machine.

The ball can be optionally passed through a molding process to retain round shape of a ball.

These and other objects, features and advantages of the present invention will become more apparent upon reading the following specification in conjunction with the accompanying drawing figures.

### BRIEF DESCRIPTION OF THE DRAWINGS

**Fig. 1** illustrates the cross-section of the layers within a sheet.
**Fig. 2** illustrates a closer view of the panel with the additional foam layers (i.e. the fourth foam layer and fifth, round patch, layer) attached.
**Fig. 3** illustrates an average sized sheet.
**Fig. 4a** illustrates printing of average 24 specifically designed panels on a sheet in one stroke.
**Fig. 4b** illustrates printing of average 42 circular panels on a sheet, in one stroke.
**Fig. 4c** illustrates printing of average 42 hexagonal panels on a sheet, in one stroke.
**Fig. 4d** illustrates printing of average 104 pentagonal panels on a sheet, in one stroke.
**Fig. 4e** illustrates printing of 36 pentagonal panels on a sheet, in one stroke.
**Fig. 5** illustrates debossing of panels on a printed sheet, in one stroke.
**Fig. 6a** illustrates cutting of panels on a sheet, in one stroke.
**Fig. 6b** illustrates cutting of average 98 hexagonal panels on a sheet, in one stroke.
**Fig. 7a** illustrates an outer view of the preferable panel having a debossing effect.
**Fig. 7b** illustrates an inner view of the preferable panel having additional foam layers attached.
**Fig. 7c** illustrates exemplary different shapes panel cut-outs.
**Fig. 7d** illustrates exemplary different shapes panel cut-outs with round patch layer.
**Fig. 8** illustrates a die-punching machine.
**Fig. 9** illustrates a specifically developed stitching machine.
**Fig. 10** illustrates an overall panel's appearance when they have been machine stitched, and the additional foam layers have been attached.
**Fig. 11a** illustrates an exemplary fabric wrapped bladder.
**Fig. 11b** illustrates an exemplary thread wound bladder.
**Fig. 12a** illustrates an exemplary DPS sport ball with exposed bladder before manual stitching.
**Fig. 12b** illustrates an overall appearance of an exemplary DPS sport ball after manual stitching.
**Fig. 13** illustrates application of special adhesive to protect the seam gaps.

### DETAIL DESCRIPTION OF THE INVENTION

To facilitate an understanding of the principles and features of the various embodiments of the invention, various illustrative embodiments are explained below. Although exemplary embodiments of the invention are explained in detail, it is to be understood that other embodiments are contemplated. Accordingly, it is not intended that the invention is limited in its scope to the details of construction and arrangement of components set forth in the following description or illustrated in the drawings. The invention is capable of other embodiments and of being practiced or carried out in various ways. Also, in describing the exemplary embodiments, specific terminology will be resorted to for the sake of clarity.

It must also be noted that, as used in the specification and the appended claims, the singular forms "a," "an" and "the" include plural references unless the context clearly dictates otherwise. For example, reference to a component is intended also to include composition of a plurality of components. References to a composition containing "a" constituent is intended to include other constituents in addition to the one named.

Also, in describing the exemplary embodiments, terminology will be resorted to for the sake of clarity. It is intended that each term contemplates its broadest meaning as understood by those skilled in the art and includes all technical equivalents which operate in a similar manner to accomplish a similar purpose.

Ranges may be expressed herein as from "about" or "approximately" or "substantially" one particular value and/or to "about" or "approximately" or "substantially" another particular value. When such a range is expressed, other exemplary embodiments include from the one particular value and/or to the other particular value.

Similarly, as used herein, "substantially free" of something, or "substantially pure", and like characterizations, can include both being "at least substantially free" of something, or "at least substantially pure", and being "completely free" of something, or "completely pure".

By "comprising" or "containing" or "including" is meant that at least the named compound, element, particle, or method step is present in the composition or article or method, but does not exclude the presence of other compounds, materials, particles, method steps, even if the other such compounds, material, particles, method steps have the same function as what is named.

It is also to be understood that the mention of one or more method steps does not preclude the presence of additional method steps or intervening method steps between those steps expressly identified. Similarly, it is also to be understood that the mention of one or more components in a composition does not preclude the presence of additional components than those expressly identified.

The materials described as making up the various elements of the invention are intended to be illustrative and not restrictive. Many suitable materials that would perform the same or a similar function as the materials described herein are intended to be embraced within the scope of the invention. Such other materials not described herein can include, but are not limited to, for example, materials that are developed after the time of the development of the invention.

The preferred embodiments, discussions and accompanying figures disclose various construction materials, their unique arrangement and method relating to the manufacture of the DPS sport ball.

For the purpose of demonstration and simplicity, a six panel soccer ball is depicted to show the unique and novel specifications, materials, techniques, and automated manufacturing processes of the present invention, but those of skill in the art will understand that similar specifications and technologies can be applied to various other types of inflatable sport balls having different purposes and configurations. For example, the present invention can comprise an inflatable ball having various number of panels-including 10, 12, 14, 20, and 32 panels - and include a variety of ball types, for example, a soccer ball, football, handball, volleyball, futsal ball, and others.

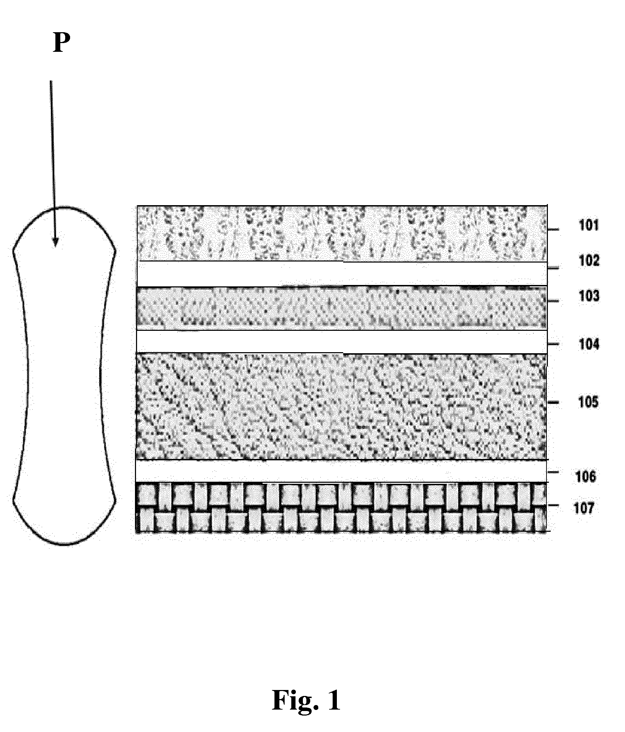

**Fig. 1** illustrates a cross-sectional view of a panel **P** having an exemplary layered system forming the present invention, showing a multi-layered structure having an outer casing that forms an exterior portion of the sport ball and a plurality of lining layers.

In an exemplary embodiment, outer casing **101** comprises an exclusively developed, environment friendly casing material, namely environment friendly polyurethane (EPU) that has excellent abrasion characteristics, feel and a soft touch.

In addition to the environment friendly exclusive feature of outer casing **101,** the present EPU is unique due to its extra soft feel having fullness and accuracy in control due in part from porous foaming. EPU is also excellent in hydrolysis and abrasion resistance, so it provides excellent durability to the ball.

Outer casing **101** can be of materials other than EPU, for example, normal PU, water-borne PU dispersion (WPU), PU micro-fiber, PU high solid, and thermoplastic polyurethane (TPU).

In exemplary embodiments, the outer casing has a thickness within a range of 0.9 mm-1.5 mm.

The present invention further comprises a plurality of lining layers **103, 105,** and **107,** each preferably bonded to adjacent layers via bonding material, for example, **102, 104** and **106.**

In an exemplary embodiment, outer casing **101** is attached to a first lining layer **103** of a plurality of lining layers using a water-based natural adhesive **102.** First lining layer **103** can comprise a woven or non-woven fabric **103** having a thickness in a range of, for example, 0.5 mm-1.5 mm. First lining layer **103** can comprise other types of material, including other forms of compatible fabric.

In an exemplary embodiment, first lining layer **103** is attached to a second lining layer **105** of the plurality of lining layers using a layer of water-based natural adhesive **104.** Second lining layer **105** can comprise a TPE foam that has excellent heat, water and weather resistance qualities. TPE foam is resistant to slip, shock absorption, and has a soft texture that results in an extra soft touch, flexibility and free flowing of the ball in the field. Second lining layer **105** can have a thickness in a range of, for example, 2.00 mm-4.00 mm. Second lining layer **105** can comprise other types of material, including other forms of compatible foam.

In an exemplary embodiment, second lining layer **105** is attached to a third lining layer **107** of the plurality of lining layers using a water-based natural adhesive layer **106.** Third lining layer **107** can comprise a fabric having a surface density in a range of, for example, 100 gm/m²-150 gm/m². Lining layer **107** can comprise, for example, 100% polyester, polyester viscose or polyester cotton.

In an exemplary embodiment, woven or non-woven fabric **103** is laminated to the outer casing **101** by means of a water-based natural adhesive **102** using auto machines, layer **103** then bonded to layer **105** by passing them through a special laminating or auto-gluing machine that smears a layer of water-based natural adhesive **104.** Afterwards, the laminated sheet comprising multiple layers is passed through a corona machine that ensures even stronger bonding. After corona treatment, the bonded sheet is laminated with another lining layer **107** by means of water-based natural adhesive layer **106.**

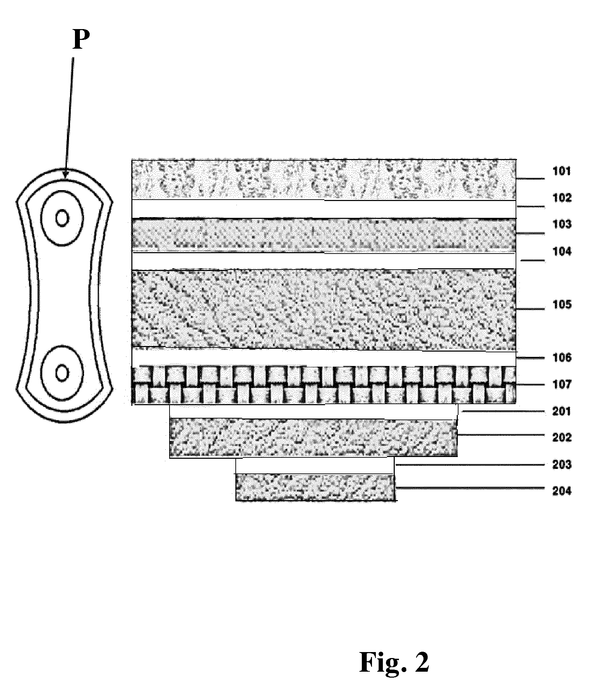

**Fig. 2** illustrates a cross-sectional view of a panel **P** of the present invention having additional lining layers over the panel of **Fig. 1****.** In **Fig. 2****,** two additional layers **202** and **204** are shown, bonded to adjacent layers via bonding material **201** and **203.**

In an exemplary embodiment, layer **202** comprises TPE foam, and layer **204** is in the form of a round patch **204.**

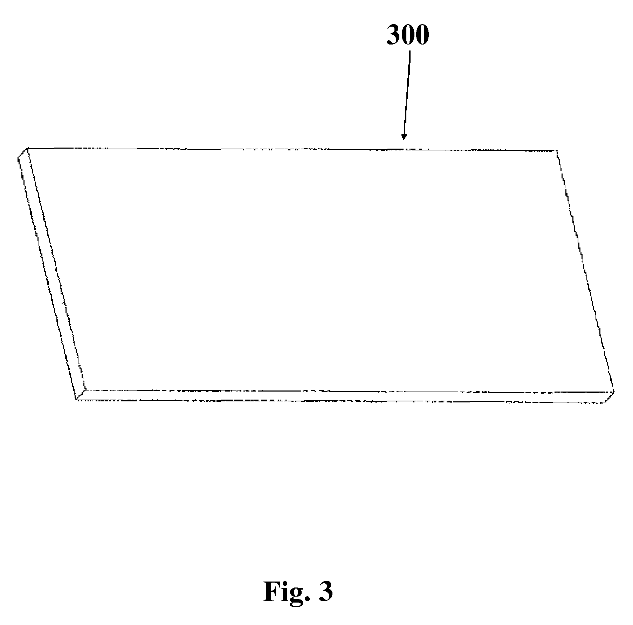

**Fig. 3** illustrates an exemplary sheet **300** sized to provide optimal panels with minimal waste. The compatible sizing of a laminated sheet is done using a specially developed sheet sizing machine equipped with laser guided presses. Preferably, the size of the sheet is adjusted within a range of 100 cm x 70 cm. Alternatively, the size of a sheet is adjustable to other ranges, such as 100 cm x 69 cm, 97.59 cm x 70.0 cm, etc. as per specific requirements.

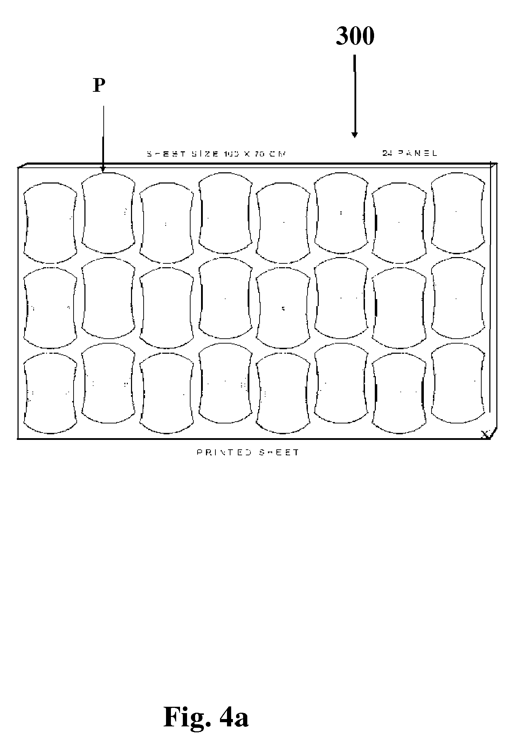

**Fig. 4a** illustrates sheet **300** being used to create an average of 24 panels **P** (that have been specifically designed) on a sheet of dimensions 100 cm x 70 cm, the panels preferably formed in one stroke, using an optimized auto-printing machine. In an alternative embodiment, for example, in the case of a size 5 ball having a 32 panel configuration, 104 (large) hexagonal panels and 98 (small) pentagonal panels are printed in one stroke on sheet **300.**

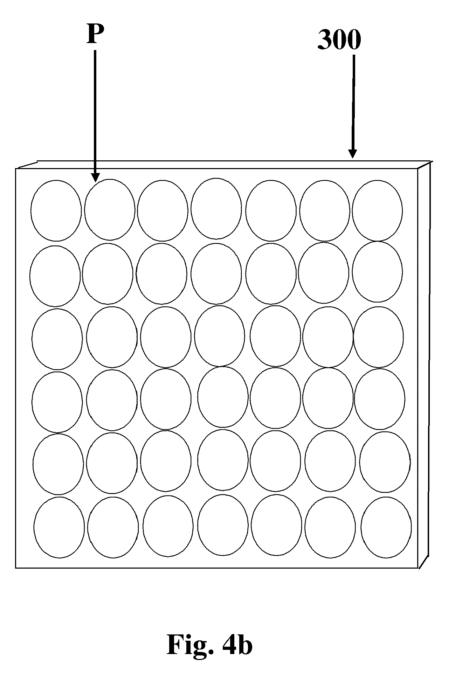

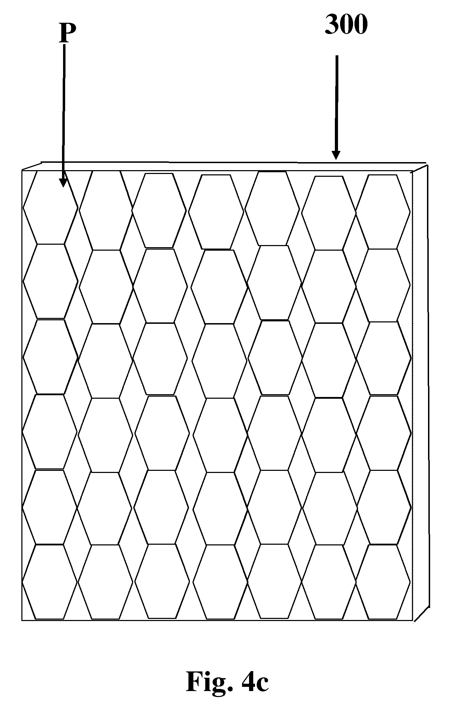

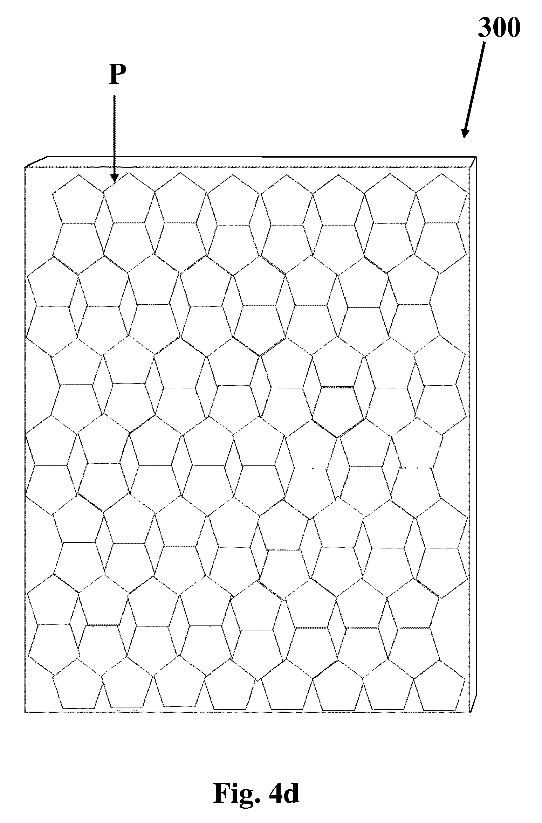

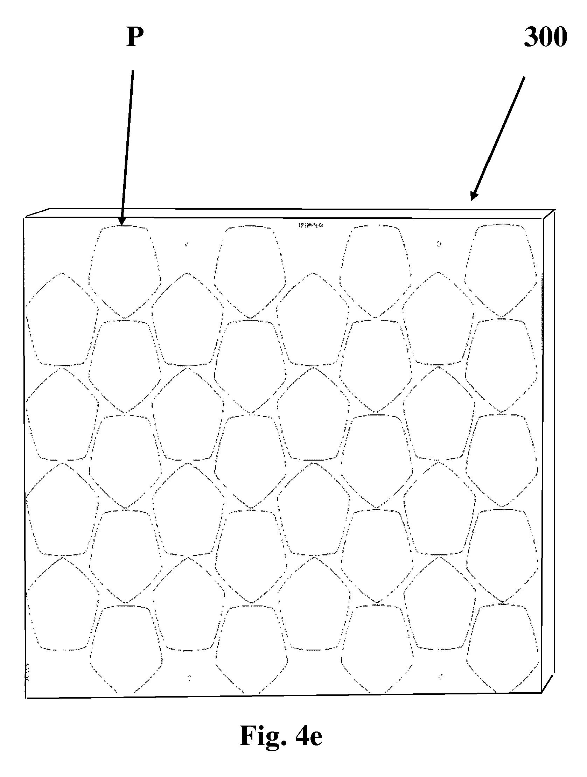

In other embodiments, other numbers and shapes of panels can be printed in a single stroke onto a sheet **300** such as printing an average 42 circular panels as illustrated in **Fig. 4b****,** printing an average 42 hexagonal panels as illustrated in **Fig. 4c****,** printing an average 104 pentagonal panels as illustrated in **Fig. 4d****,** and printing an average 36 pentagonal panels as illustrated in **Fig. 4e****,** among others.

Similarly, for size 4 or size 3 balls, a variety of numbers and configurations of panels **P** can be printed in a single stroke, as per the specific requirement.

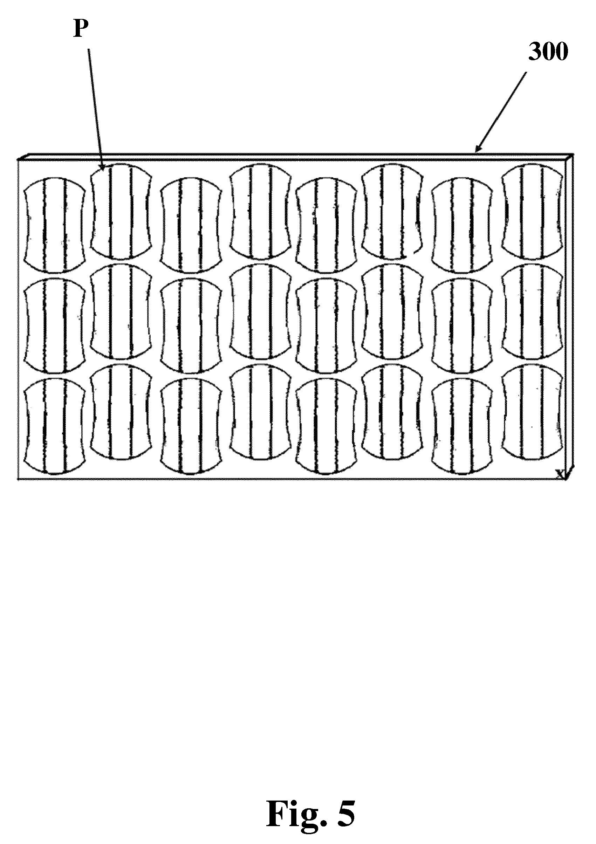

**Fig. 5** illustrates debossing an average 24 panels **P** on a sheet **300** in one stroke, using a specifically optimized machine after printing. Based on the specific requirements, the printed sheet **300** can move to the next manufacturing process without debossing.

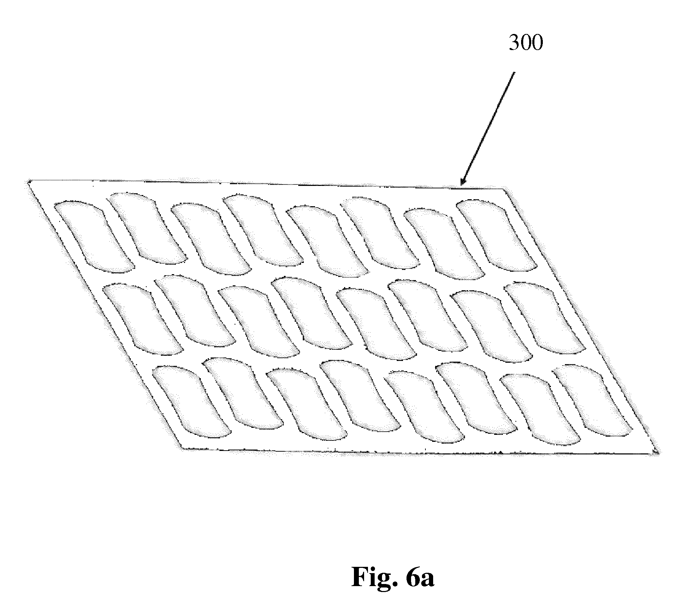

**Fig. 6a** illustrates a sheet **300** with the panels **P** cut therefrom. Here, an average 24 specifically designed panels can be cut in one stroke using a specifically developed cutting machine.

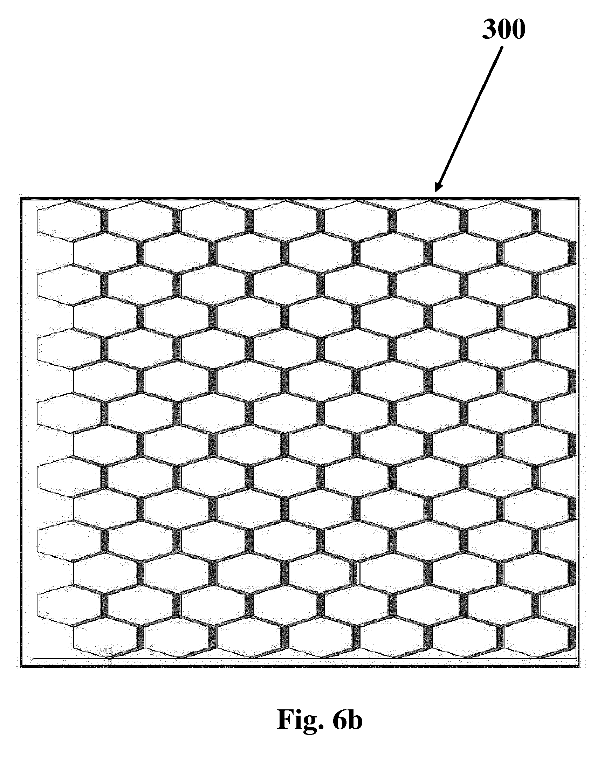

In alternative embodiments, other shapes can be cut out in a single stroke from a sheet, such as average 98 hexagonal panels cut out in a single stroke as illustrated in **Fig. 6b****.** Other examples, include, in the case of a size 5 ball, 104 (large) hexagonal panels and 98 (small) pentagonal panels cut out in one stroke.

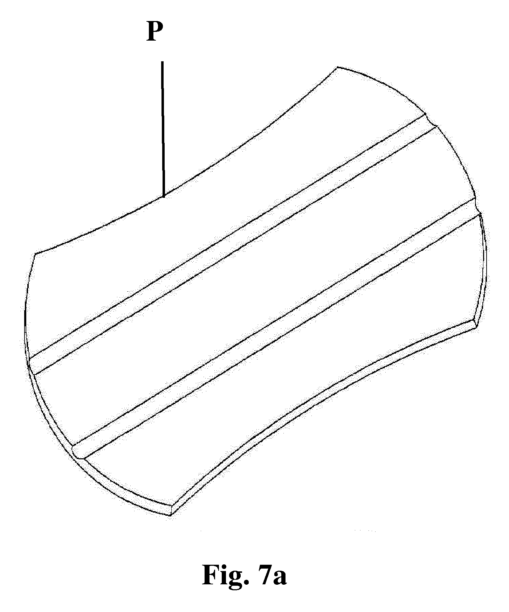

**Fig. 7a** illustrates an exemplary embodiment of a single panel **P** from an outer view having a debossing effect.

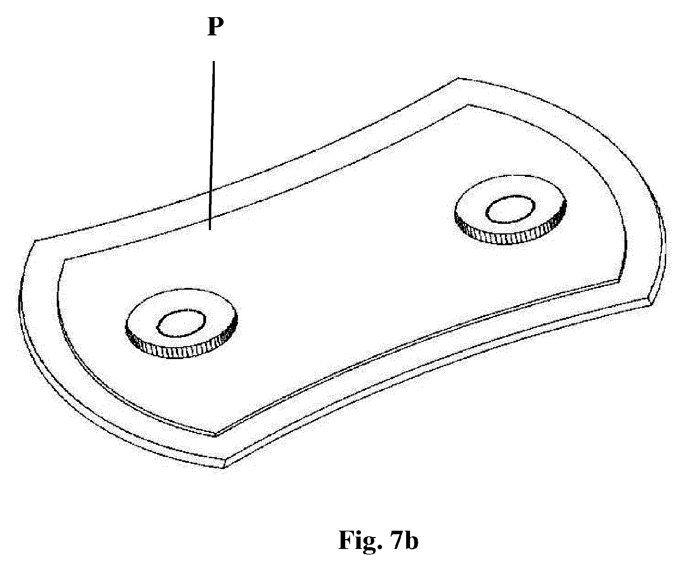

**Fig. 7b** illustrates the panel **P** of **Fig. 7a** from an inner view, showing a configuration of the plurality of layers, and relative sizes and shapes of such layers.

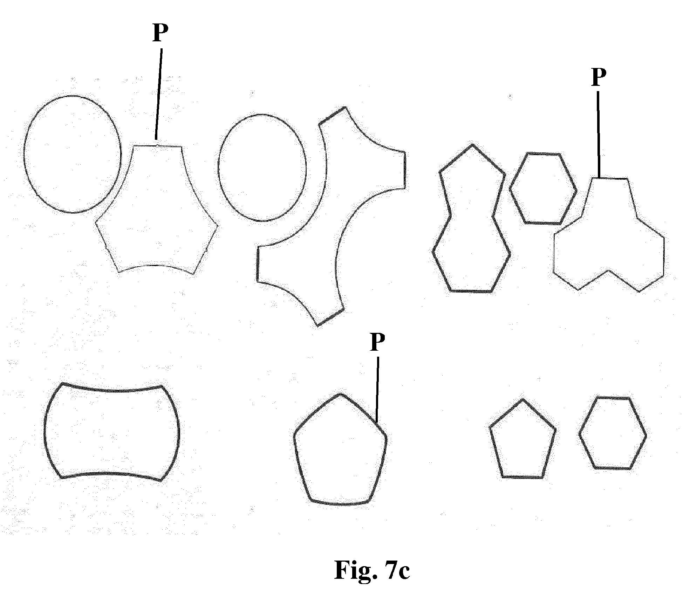

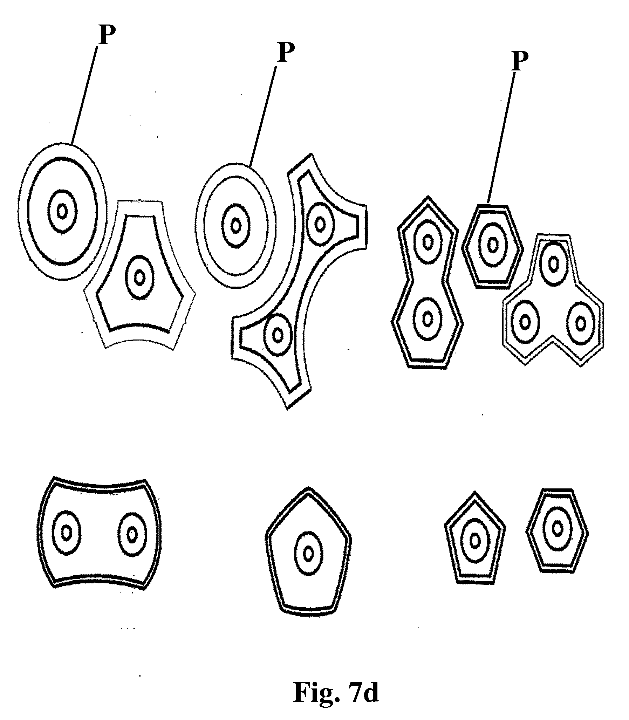

**Fig. 7c** illustrates a variety of different shapes of panels **P** from an outer view. **Fig. 7d** illustrates the panels **P** of **Fig. 7c** from an inner view.

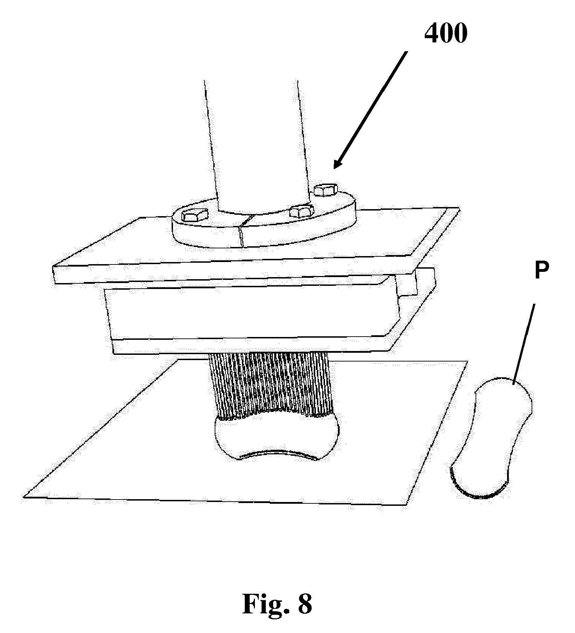

**Fig. 8** illustrates an exemplary embodiment of a die-punching machine **400** using a specifically designed computer numeric controlled (CNC) punching press. The machine **400** used is highly optimized to work efficiently and accurately on the multi-layered panels and punch holes on all sides of the multiple panels simultaneously in a single stroke before they are stitched together to form a ball.

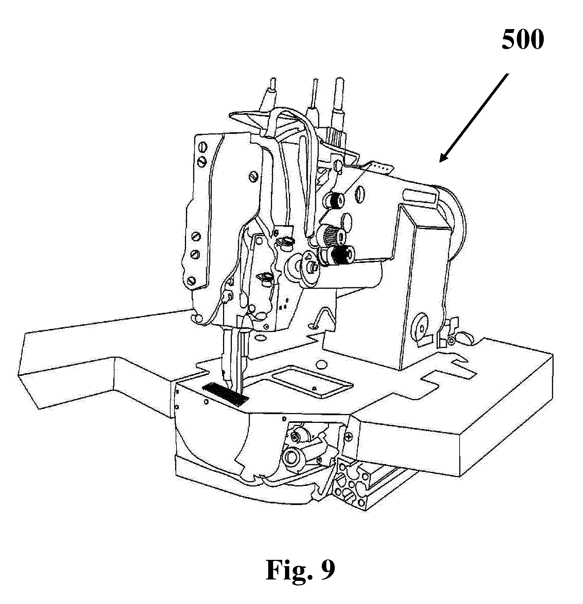

**Fig. 9** illustrates an automated stitching machine **500** with unique features including an air pressure system to control, press and stitch most or all of the panels, and even then, perhaps only a portion of the stitching to leave portion(s) of stitching to be manually stitched. However, other compatible stitching machines can be employed and used to stitch the panels together.

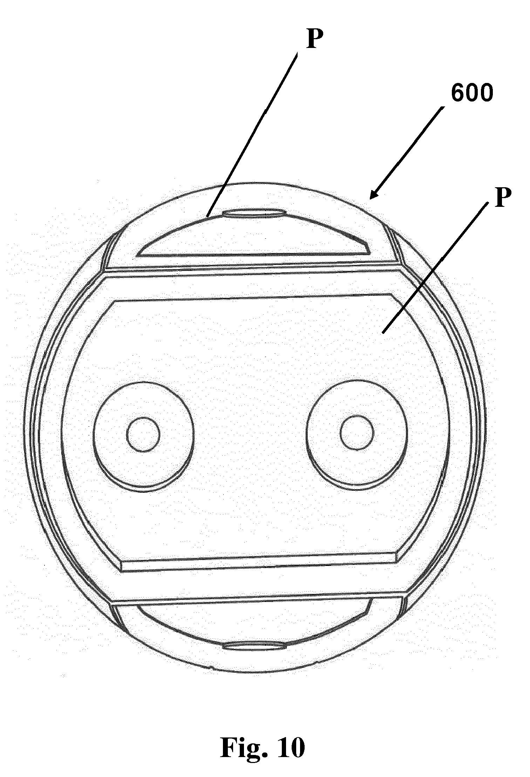

**Fig. 10** illustrates in an exemplary embodiment an overall appearance of a plurality of panels **P** having been machine-stitched to form ball **600.** The TPE foam layer **202** has been bonded by means of water-based natural adhesive **201.** Additionally, other compatible foam may also be laminated.

Additionally, round or any other compatible shaped patches of TPE foam **204** or other compatible foam can be bonded using water-based natural adhesive **203.**

Accordingly, a TPE foam round patch can have a thickness within a range of 1.5 mm-3.00 mm to create a variety of pressure, preferably dual pressure, thus forming greater seams on the ball.

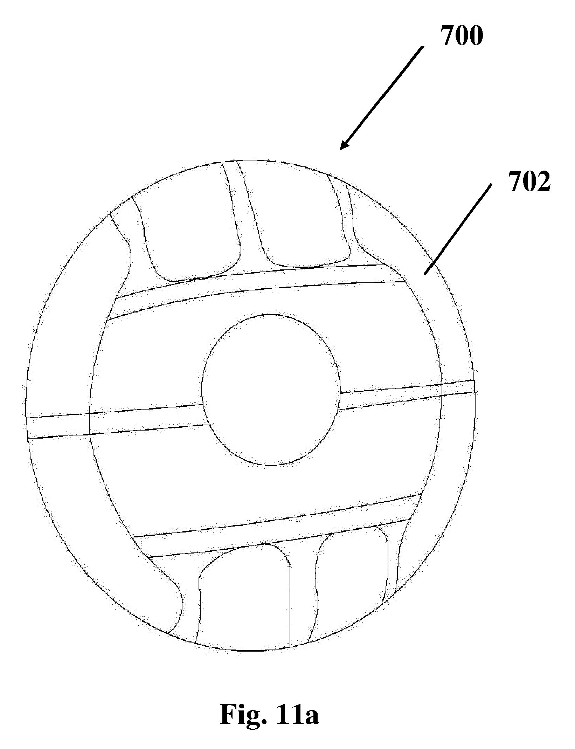

**Fig. 11a** illustrates an exemplary bladder **700** wrapped with a special fabric **702.**

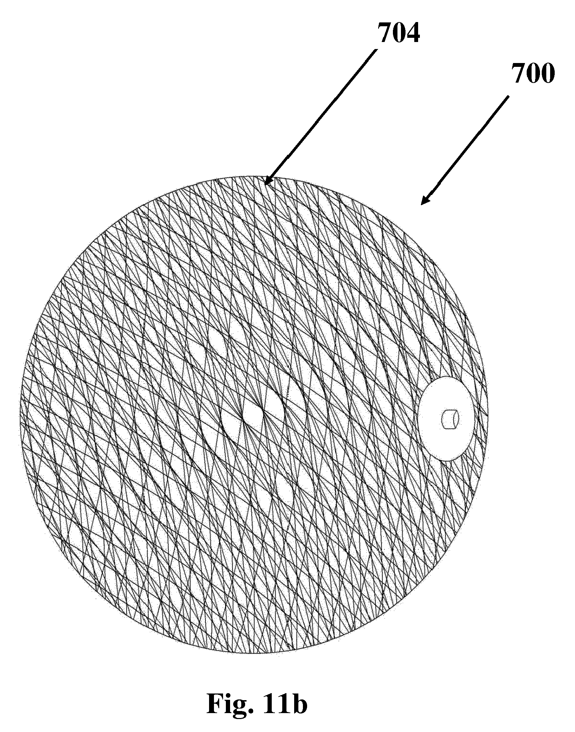

**Fig. 11b** illustrates an exemplary bladder **700** that is thread wound via thread **704.**

In exemplary embodiments, the bladder used is a specific compatible rubber bladder, additionally wrapped with a special compatible fabric **(****Fig. 11a****)** or thread wound **(****Fig. 11b****)** to retain air, maintain robustness and spherecity of the ball.

Alternatively, the bladder can be formed of other materials, such as natural latex, butyl, carbon latex, and PU.

During the manufacturing process, the partially machine-stitched sport ball is then reversed such that it already contains a suitable bladder.

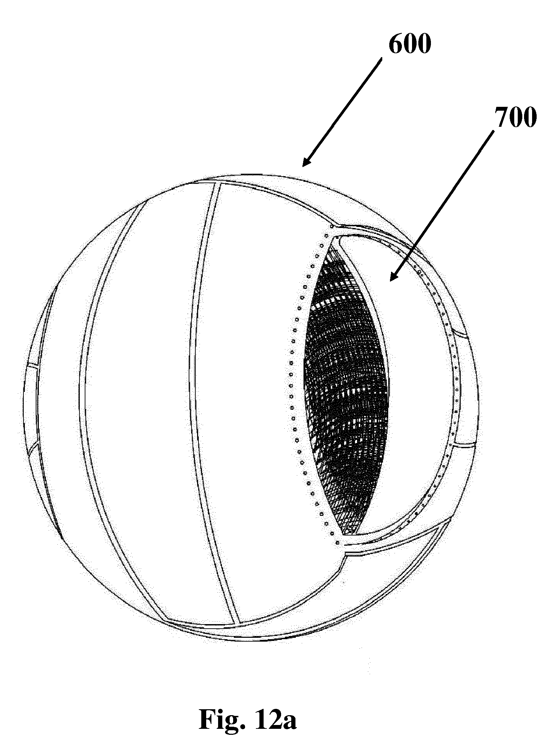

**Fig. 12a** illustrates an exemplary sport ball **600** with the bladder **700** exposed before manual stitching. The remaining portion of the panels is then manually stitched, to close the ball.

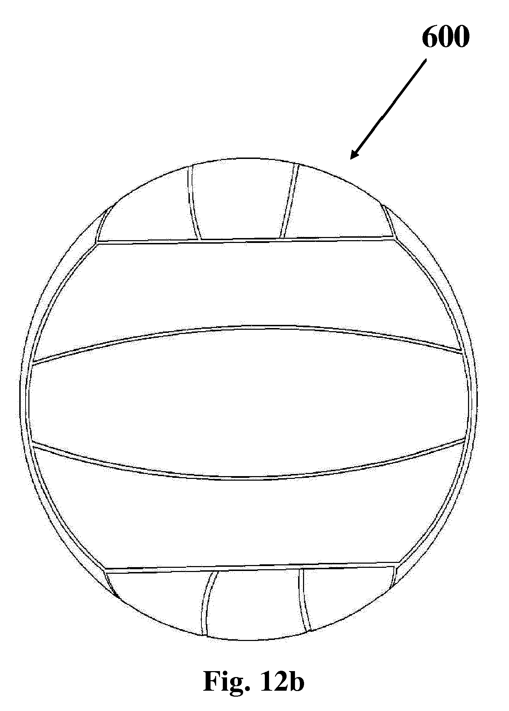

**Fig. 12b** illustrates an overall appearance of the present DPS sport ball **600** after manual stitching is complete.

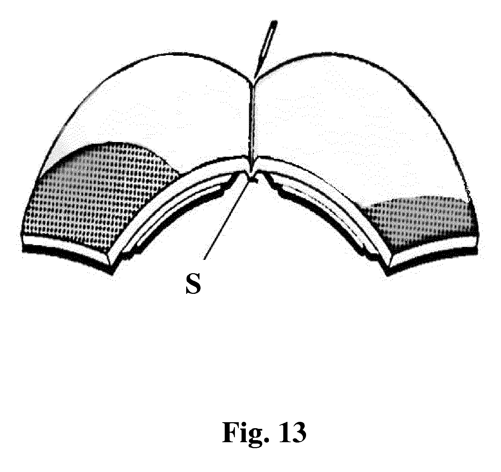

The seams **S** are then protected with a special adhesive application, illustrated in **Fig. 13**

In an exemplary embodiment, the inflated sport ball is passed through a molding process to attain the round shape of the ball.

The inflated sport ball is then kept for 48 hours to ensure standard air retention and also to identify/rule out risk of slow leakage. Thereafter, the ball is cleaned, washed, dried, deflated and passed through a metal detector machine, wherein the sensitivity of the detector machine to metals is up to 1.00 mm so even small imperfections are found.

Resultantly, due to the unique and novel construction materials, their novel and specific arrangement, innovative techniques, and highly automated manufacturing processes, the present DPS sport ball has a top quality, durability, playability, controllability and an excellent flight characteristics.

The present DPS sport ball manufactured by this process qualifies in all the international standards of a match/professional ball at a very competitive price.

Numerous characteristics and advantages have been set forth in the foregoing description, together with details of structure and function. While the invention has been disclosed in several forms, it will be apparent to those skilled in the art that many modifications, additions, and deletions, especially in matters of shape, size, and arrangement of parts, can be made therein without departing from the spirit and scope of the invention and its equivalents as set forth in the following claims. Therefore, other modifications or embodiments as may be suggested by the teachings herein are particularly reserved as they fall within the breadth and scope of the claims here appended.

## Claims

1. A dual pressure system (DPS) sport ball comprising:
an outer casing forming an exterior surface of the ball;
an inner bladder; and
a multiple lining system, the multiple lining system located between the outer casing and the inner bladder.

2. The DPS sport ball of Claim 1, wherein the outer casing is selected from the group consisting of polyurethane (PU), environment friendly PU (EPU), water-borne PU (WPU), PU micro-fiber, PU high solid and thermoplastic PU (TPU).

3. The DPS sport ball of Claim 1, wherein the outer casing comprises EPU.

4. The DPS sport ball of Claim 1, wherein the multiple lining system comprises at least three lining layers.

5. The DPS sport ball of Claim 1, wherein the multiple lining system comprises five lining layers.

6. The DPS sport ball of Claim 1, wherein the inner bladder is a specially developed rubber bladder.

7. The DPS sport ball of Claim 1, wherein the multiple lining system comprises five lining layers;
wherein the outer casing comprises a material selected from the group consisting of PU, EPU, WPU, PU micro-fiber, PU high solid and TPU;
wherein each of the five lining layers comprise a material selected from the group consisting of fabric and foam;
wherein each of the five lining layers is bonded to an adjacent lining layer with a bonding material; and
wherein the multiple lining system is bonded to the outer casing to form a panel.

8. The DPS sport ball of Claim 5, wherein each lining layer comprises a material selected from the group consisting of fabric and foam; and
wherein each lining layer is bonded to an adjacent lining layer with a bonding material.

9. The DPS sport ball of Claim 6, wherein the bladder is wrapped with a fabric

10. The DPS sport ball of Claim 6, wherein the bladder is wound with a thread.

11. The DPS sport ball of Claim 7, wherein the bonding material between each lining layer is selected from the group consisting of a natural adhesive and a synthetic adhesive.

12. The DPS sport ball of Claim 7, wherein the bonding material between each lining layer comprises a water-based natural adhesive.

13. The DPS sport ball of Claim 7, wherein a first lining layer of the multiple lining system comprises a material selected from the group consisting of woven fabric and non-woven fabric, the first lining layer bonded to the outer casing;
wherein a second lining layer comprises a foam material, the second lining layer bonded to the first lining layer;
wherein a third lining layer comprises a material selected from the group consisting of polyester viscose, polyester cotton, and 100% polyester fabric, the third lining layer bonded to the second lining layer;
wherein a fourth lining layer comprises a foam material, the fourth lining layer bonded to the third lining layer; and
wherein a fifth lining layer comprises a foam material, the fifth lining layer bonded to the fourth lining layer, the fifth lining layer being in proximity to the inner bladder.

14. The DPS sport ball of Claim 7, wherein the surface of the panels is debossed.

15. The DPS sport ball of Claim 7, wherein the surface of a panel is debossed with two parallel lines.

16. The DPS sport ball of Claim 13, wherein the foam material of the second, fourth and fifth lining layer comprises thermoplastic elastomer (TPE) foam.

17. The DPS sport ball of Claim 13, wherein each of the outer casing, first, second and third lining layers is of approximately the same surface area; and
wherein the fourth and fifth lining layers of each panel has a smaller surface area dimension than that of the outer casing, first, second and third lining layers.

18. The DPS sport ball of Claim 17, wherein the fifth lining layer has a smaller surface area dimension than that of the fourth lining layer.

19. The DPS sport ball of Claim 18, wherein the fifth lining layer are in the form of a patch/es.

20. The DPS sport ball of Claim 19, wherein each patch has a surface area in the range of 9.62 cm²-19.63 cm².

21. The DPS sport ball of Claim 19, wherein each patch has at least one aperture therethrough, each aperture having a surface area in the range of 0.38 cm²-3.14 cm².

22. The DPS sport ball of Claim 19, wherein each patch has at least one aperture therethrough;
wherein each patch is round having diameter in the range of 3.5 cm - 5 cm; and
wherein each aperture is round having diameter in the range of .7 cm - 1 cm.

23. A dual pressure system (DPS) sport ball comprising:
an outer casing forming an exterior surface of the ball;
an inner bladder; and
a multiple lining system having five lining layers, the multiple lining system located between the outer casing and the inner bladder, an outer surface of the multiple lining system bonded to the outer casing, and an inner surface of the lining system surrounds the inner bladder;
wherein the outer casing is selected from the group consisting of PU, environment friendly PU (EPU), WPU, PU micro-fiber, PU high solid and TPU;
wherein each of the five lining layers comprise a material selected from the group consisting of fabric and foam;
wherein each of the five lining layers is bonded to an adjacent lining layer with a bonding material; and
wherein the water uptake by the ball is less than 0.4%.

24. A method of manufacturing the dual pressure system (DPS) sport ball of claim 1 comprising:
forming a sheet of the multiple lining layers;
laminating the outer casing sheet to the multiple lining layers;
sizing the sheet;
printing panels;
cutting the panels;
die-punching the panels;
machine stitching the panels;
incorporating the inner bladder;
manually stitching of the remaining portion of the panels to close the ball; and
protecting seams of the outer casing.

25. The method of manufacturing the DPS sport ball of Claim 24, wherein the multiple lining layers are laminated to the outer casing by means of adhesive to form a sheet; and
wherein the laminated sheet is sized by utilizing specific laser guided presses.

26. The method of manufacturing the DPS sport ball of Claim 24 further comprising the printing of multiple panels on a sheet by a highly optimized printing machine;
wherein multiple panels of specific shape and size are printed in a single stroke.

27. The method of manufacturing the DPS sport ball of Claim 24 further comprising debossing on the printed panels by a debossing machine.

28. The method of manufacturing the DPS sport ball of Claim 24 further comprising the cutting of multiple printed panels in a single stroke by using a cutting machine.

29. The method of manufacturing the DPS sport ball of Claim 24 further comprising die-punching of the panels by computer numeric controlled (CNC) punching presses to form holes on both sides of the panels for stitching in one stroke.

30. The method of manufacturing the DPS sport ball of Claim 24 further comprising the stitching of the panels by stitching machine, equipped with a special air pressure system to press and control the panels.

31. The method of manufacturing the DPS sport ball of Claim 24 further comprising the bonding of additional fourth and fifth layer to each of the panels of the ball with a water based adhesive.

32. The method of manufacturing the DPS sport ball of Claim 24 further comprising the manual stitching of remaining portion of panels, to close the ball.

33. The method of manufacturing the DPS sport ball of Claim 24 further comprising protecting seams of adjacent panels;
wherein the special adhesive is applied manually or by auto-machine.

34. The method of manufacturing the DPS sport ball of Claim 24, wherein the ball is optionally passed through a molding process, to retain round shape of the ball.

35. The method of manufacturing the DPS sport ball of Claim 26, wherein the shape of the printed panel is selected from the group consisting of octagonal, hexagonal, pentagonal, and circular.

36. The method of manufacturing the DPS sport ball of Claim 31, wherein the ball is reversed manually and the inner bladder is incorporated.
